# EUROPEAN PATENT APPLICATION

(11) **EP 3 716 351 A1**
(43) Date of publication of application: **30.09.2020**
(21) Application number: 19815125.0
(22) Date of filing: 07.03.2019
(51) Int. Cl.: H01M 2/04, H01M 2/06, H01M 2/34, H01M 2/12, H01M 2/26

(54) **SECONDARY BATTERY**

(30) Priority: 05.06.2018 KR 20180065057
(71) Applicant: LG CHEM, LTD., Yeongdeungpo-gu, Seoul 07336 (KR)
(72) Inventor: KIM, Do Gyun, Daejeon 34122 (KR); JUNG, Sang Suk, Daejeon 34122 (KR); LEE, Byoung Kook, Daejeon 34122 (KR); LEE, Byoung Gu, Daejeon 34122 (KR); KIM, Chan Bae, Daejeon 34122 (KR)
(74) Representative: Plasseraud IP
(86) International application number: PCT/KR2019/002685
(87) International publication number: WO 2019/235721

(57) **Abstract**

A secondary battery is disclosed.

When an external electrical conductive object is electrically connected directly to a positive electrode and a negative electrode of the cylindrical secondary battery, an insulation layer may be formed on an area on which the top cap and the first gasket are coupled to each other so that an electrode tap of the secondary battery is broken as quickly as possible, and the insulation layer may include a ceramic material and a binder.

## Description

### CROSS-REFERENCE TO RELATED APPLICATION

The present application claims the benefit of the priority of Korean Patent Application No. 10-2018-0065057, filed on June 05, 2018, which is hereby incorporated by reference in its entirety.

### TECHNICAL FIELD

The present invention relates to a secondary battery, and more particularly, to a secondary battery having a structure capable of solving safety problems that may occur due to external short circuit.

### BACKGROUND ART

As technology development and demands for electronic devices increase, the demands for secondary batteries for supplying energy to the electronic devices are also increasing. Particularly, much research has been conducted on a lithium ion secondary battery having higher energy density and discharge voltage than those of the existing lithium ion secondary battery.

A secondary battery may be classified into a cylindrical or prismatic secondary battery having a structure in which an electrode assembly including an electrode and a separator is accommodated in a cylindrical or prismatic metal can and a pouch-type secondary battery having a structure in which an electrode assembly is accommodated in a pouch-type case containing aluminum according to structural characteristics or manufacturing characteristics. Among them, the cylindrical secondary battery has advantages in that it has relatively large capacity and is structurally stable.

However, in the case of the secondary battery including a cylindrical secondary battery, the secondary battery may be exposed to various types of risks during the use. In this case, problems such as ignition or explosion of the secondary battery may occur. In order to prevent the above problems from occurring, the secondary battery is generally provided with various members for improving safety of the secondary battery.

The members for improving the safety of the secondary battery may include, for example, a crimping gasket provided between a crimping part formed in an upper portion of a battery can constituting a main body of the secondary battery and a top cap or a safety vent to seal an inner space of the secondary battery from the outside and a CID gasket provided between the safety vent and a current interrupt device (CID) filter.

It is necessary that an electrode tab of the secondary battery be cut off as quickly as possible when the external electrical conductive object is electrically connected directly to a positive electrode and a negative electrode of the cylindrical secondary battery. However, according to the related art, when the positive electrode and the native electrode of the secondary battery are electrically directly connected to each other by the external electrical conductive object, there is a problem in that a considerable time is required to cut off the current by breaking the electrode tab.

### DISCLOSURE OF THE INVENTION

### TECHNICAL PROBLEM

An object to be solved by the present invention is to quickly cut off current by breaking an electrode tab as quickly as possible when an external electrical conductive object is electrically connected directly to a positive electrode and a negative electrode of a cylindrical secondary battery.

### TECHNICAL SOLUTION

According to an aspect of the present invention for achieving the above object, disclosed is a secondary battery including: a battery can accommodating an electrode assembly and having a structure of which an upper side is opened; a top cap provided on an upper portion of the battery can; a safety vent provided below the top cap; a current interrupt device (CID) filter provided below the safety vent; a first gasket provided on an inner surface of the upper portion of the battery can and closely attached to a side portion of the safety vent to insulate the safety vent from the upper portion of the battery can; and a second gasket provided between the safety vent and the CID filter and closely attached to an upper portion of the CID filter to surround an outer end of the CID filter, the second gasket being closely attached to a lower portion of the safety vent, wherein an insulation layer is formed on an area on which the top cap and the first gasket are closely attached to each other.

The insulation layer may include a ceramic material and a binder.

The ceramic material may include aluminum oxide or silicon oxide.

The binder may be contained at a content of 20 wt% to 90 wt% on the basis of a total weight of the insulation layer.

A ratio of a thickness of the insulation layer to a thickness of the top cap may range of 0.015 to 0.15.

A crimping part having a structure that is entirely or partially bent in an S-shape may be formed on the upper portion of the battery can, and the first gasket may be closely attached to an inner surface of the crimping part.

The insulation layer may be formed on an area, which is disposed between an upper end of the crimping part and the top cap, of an inner area of the first gasket as a top surface of the top cap.

The insulation layer may have a thickness of 0.015 mm to 0.045 mm.

The top cap may have a thickness of 0.3 mm to 1.0 mm.

### ADVANTAGEOUS EFFECTS

According to the present invention, when the external electrical conductive object is electrically connected directly to the positive electrode and the negative electrode of the cylindrical secondary battery, the electrode tab of the secondary battery may be broken as quickly as possible to quickly cut off the current.

### BRIEF DESCRIPTION OF THE DRAWINGS

FIG. 1 is a cross-sectional view illustrating an upper structure of a secondary battery according to a first example of the present invention.
FIG. 2 is a cross-sectional view illustrating an upper structure of a secondary battery according to a second example of the present invention.
FIG. 3 is a cross-sectional view illustrating a structure of a first gasket of the secondary battery according to the present invention.

### MODE FOR CARRYING OUT THE INVENTION

Hereinafter, a structure of a secondary battery according to the present invention will be described with reference to the accompanying drawings.

### Secondary Battery

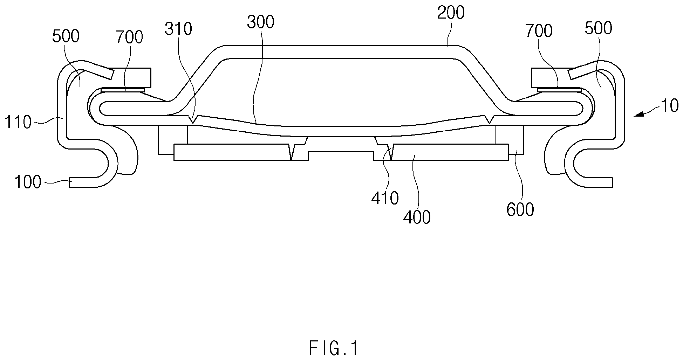

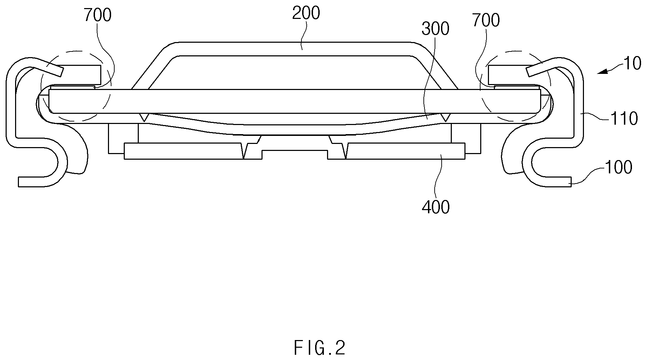

FIG. 1 is a cross-sectional view illustrating an upper structure of a secondary battery according to a first example of the present invention, and FIG. 2 is a cross-sectional view illustrating an upper structure of a secondary battery according to a second example of the present invention.

As illustrated in FIGS. 1 and 2, a secondary battery 10 according to the present invention may include a battery can 100 that accommodates an electrode assembly (not shown). The battery can 100 may have a structure of which an upper side is opened. The battery can 100 may have a cylindrical shape. That is, the secondary battery according to the present invention may be a cylindrical secondary battery.

As illustrated in FIGS. 1 and 2, a crimping part 110 having a structure that is bent in an S-shape may be formed in an upper portion of the battery can 100. Here, the expression 'the crimping part 110 has a structure bent in the S-shape' means that the crimping part 110 has at least one region protruding to the outside of the battery can and at least one region protruding to the inside of the battery can. For example, as illustrated in FIGS. 1 and 2, an upper portion of the crimping part 110 may protrude to the outside of the battery can 100, and a lower portion of the crimping part 110 may protrude to the inside of the battery can 100.

A top cap 200 may be disposed in the upper portion of the battery can 100. The top cap 200 may be a constituent for sealing the opened upper portion of the battery can 100.

A safety vent 300 may be provided below the top cap 200. The safety vent 300 may be a constituent for exhausting a gas within the secondary battery when an internal pressure of the secondary battery exceeds a predetermined range. For this, a notch 310 having a thickness less than that of each of other portions thereof may be formed in the safety vent 300. Hereinafter, in this specification, the notch formed in the safety vent 300 will be called a 'first notch 310'. When the internal pressure of the secondary battery exceeds the predetermined range, the first notch 310 of the safety vent 300 may be broken to exhaust the gas within the secondary battery. Thus, explosion due to an increase in internal pressure of the secondary battery may be prevented.

As illustrated in FIG. 1, the safety vent 300 may be closely attached to a lower portion of the top cap 200. Here, as illustrated in FIG. 1, an end of the safety vent 300 may be bent upward and then bent again to the inside of the battery can so that the end of the safety vent 300 surrounds a peripheral portion of the top cap 200. On the other hand, as illustrated in FIG. 2, the safety vent 300 may have a structure in which an end of the safety vent 300 is bent upward only once to surround a side surface of the top cap 200.

A current interrupt device (CID) filter 400 may be provided below the safety vent 300. A portion of an area of the safety vent 300 and a portion of an area of the CID filter 400 may be closely attached to each other or adhere to each other. For example, as illustrated in FIGS. 1 and 2, a central portion of the safety vent 300 and a central portion of the CID filter 400 may be closely attached to each other or adhere to each other. The safety vent 300 and the CID filter 400 may be spaced apart from each other except for the areas on which the safety vent 300 and the CID filter are closely attached to each other or adhere to each other.

The CID filter 400 may be a constituent configured to cut off the current of the secondary battery in emergency. For this, a notch 410 having a thickness less than that of each of other portions thereof may be formed in the CID filter 400. Hereinafter, in this specification, the notch formed in the CID filter 400 will be called a 'second notch 410'. When the internal pressure of the secondary battery exceeds the predetermined range, the CID filter 400 may be broken to cut off the current of the secondary battery. Particularly, when the second notch 410 is formed, the CID filter 400 may be broken at the second notch 410. Thus, explosion due to an increase in internal pressure of the secondary battery may be prevented.

As described above, the top cap and the safety vent may be provided in the upper portion of the battery can. Nevertheless, sealability of the inner space of the battery can may be deteriorated as ever. When the sealability is deteriorated, an electrolyte within the secondary battery may leak to the outside, and external foreign substances may be introduced into the secondary battery.

Thus, to improve the sealability of the inner space of the battery can, a gasket 500 may be additionally provided in the upper portion of the battery can 100. The gasket 500 may be disposed on an inner surface of the upper portion of the battery can 100. When the crimping part 110 is formed in the upper portion of the battery can 100, the gasket 500 may be closely attached to the inner surface of the crimping part 110. As described above, when the safety vent 300 has the structure that is bent upward and then bent again to the inside of the battery can, the gasket 500 may be disposed between the crimping part 110 and the safety vent and be closely attached to an outer portion of the safety vent. Hereinafter, the gasket 500 disposed in the upper portion of the battery can 100 will be called a 'first gasket'. The first gasket 500 may be provided to more improve the sealability of the inner space of the battery can.

As described above, the portion of the area of the safety vent 300 and the portion of the area of the CID filter 400 may be closely attached to each other or adhere to each other, and the safety vent 300 and the CID filter 400 may be spaced apart from each other on other areas thereof. Also, the gasket 600 may be provided between the safety vent 300 and the CID filter 400 so that the areas on which the safety vent 300 and the CID filter 400 are spaced apart from each other are maintained to be spaced apart from each other. Hereinafter, the gasket 600 provided on the safety vent 300 and the CID filter 400 will be called a 'second gasket'. The second gasket 600 may be provided to maintain the spaced state of the areas on which the safety vent 300 and the CID filter 400 are spaced apart from each other.

Continuously, referring to FIGS. 1 and 2, an insulation layer 700 may be formed on an area on which the top cap 200 and the first gasket 500 are closely attached to each other in the secondary battery according to the present invention. More preferably, the insulation layer 700 may adhere to an area (see a dotted line in FIG. 2), on which the top cap 200 and the first gasket 500 are closely attached to each other, of a top surface of the top cap 200. For example, the insulation layer 700 may be formed on the top surface of the top cap 200 in a spray injection manner. Alternatively, the insulation layer 700 may be formed in a coating manner in which a material forming the insulation layer is applied and pressed to the top surface of the top cap 200 or in a manner in which the material forming the insulation layer is injected by nozzle to the top surface of the top cap 200 through a nozzle.

The insulation layer 700 may contain a ceramic material and a binder. The ceramic material may include aluminum oxide or silicon oxide.

When a positive electrode and a negative electrode of the secondary battery are electrically connected to each other by an external electrical conductive object, heat is generated in the secondary battery while an excessive amount of current flows. In this case, it is preferable for the safety to cut off the flow of the current through the secondary battery by breaking the electrode tab of the secondary battery.

Here, it is necessary that the electrode tab of the secondary battery be cut off as quickly as possible when the external electrical conductive object is electrically connected directly to the positive electrode and the negative electrode of the cylindrical secondary battery. However, according to the related art, when the positive electrode and the negative electrode of the secondary battery are electrically directly connected to each other by the external electrical conductive object, there is a problem in that a considerable time is required to cut off the current by breaking the electrode tab.

The insulation layer according to the present invention may be a constituent for solving the problem in which it takes a considerable time to break the electrode tab. That is, as a result of conducting experiments by the inventor of the present invention, in the case in which a separate insulation layer containing the ceramic material and the binder is formed on the top surface of the top cap under certain conditions, when the external electrical conductive object is electrically connected directly to the positive electrode and the negative electrode of the cylindrical secondary battery, a time taken to cut off the current by breaking the electrode tab may be remarkably reduced.

Since the insulation layer 700 of the present invention includes the ceramic material as well as the binder, the insulation layer having a larger thickness than that when forming an insulating layer using the ceramic material in another manner may be formed.

For example, evaporation may be used as the method of applying the ceramic material to the top cap. However, when the ceramic material is applied to the top cap in the evaporation manner to form the insulation layer, the thickness of the insulation layer may be limited. That is, when the ceramic material is applied to the top cap in the evaporation manner to form the insulation layer, if the thickness of the insulation layer increases, the insulation layer may be delaminated due to the deterioration of the adhesion force between the ceramic materials. Thus, the thickness of the insulation layer may be limited. Here, when the thickness of the insulation layer decreases, heat generated in the secondary battery, particularly, in the secondary battery in which the electrode tab is electrically connected to the CID filter may be easily released. As described above, when the heat generated in the upper portion of the secondary battery is released, since a temperature of the electrode tab does not rapidly increase, it may take a considerable time to cut off the current by breaking the electrode tab.

However, as described above, since the insulation layer according to the present invention includes not only the ceramic material but also the binder, bonding force between the ceramic materials may be improved by the binder. Thus, even though the insulation layer having the thick thickness is formed on the top cap, the shape of the insulation layer may be maintained to prevent the heat generated in the upper portion of the secondary battery from being released to the outside. Therefore, according to the present invention, when the external electrical conductive object is electrically connected directly to the positive electrode and the negative electrode of the cylindrical secondary battery, the electrode tab may be quickly broken.

When the external electrical conductive object is electrically connected directly to the positive electrode and the negative electrode of the cylindrical secondary battery, if the electrode tab is not quickly broken, the entire temperature of the secondary battery may sharply increase. This may cause explosion or fire of the secondary battery.

However, when the insulation layer is formed on the top cap so that the electrode tab is quickly broken according to the present invention, the current of the secondary battery may be cut off to prevent the secondary battery from sharply increasing in temperature. That is, according to the present invention, a local temperature rise may be induced in a space in which the electrode tab is formed to quickly break the electrode tab and prevent the secondary battery from sharply increasing in temperature.

The binder of the insulation layer according to the present invention may include an organic binder. As described above, the insulation layer may be formed through the coating in the spray injection manner. When the binder includes the organic binder, since the material forming the insulation layer is maintained in a liquid phase in the coating step using the spray injection manner, the coating using the spray injection manner may be smoothly performed.

Also, in the insulation layer according to the present invention, the binder may be contained at a content of 20 wt% to 90 wt%, preferably, 30 wt% to 70 wt%, more preferably, 40 wt% to 50 wt% on the basis of the total weight of the insulation layer. When the content of the binder is less than 20 wt% on the basis of the total weight of the insulation layer, the bonding between the ceramic materials may not be smoothly performed. On the other hand, when the content of the binder exceeds 90 wt% on the basis of the total weight of the insulation layer, since an amount of ceramic material is excessively small, the heat generated in the upper portion of the secondary battery may be released to the outside. Thus, the electrode tab may not be quickly broken.

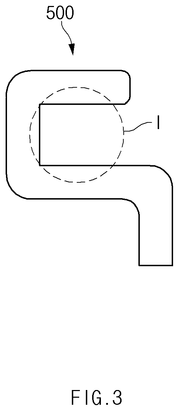

As illustrated in FIG. 1, the insulation layer 700 may be formed between an end of the upper portion of the crimping part 110 (i.e., a portion of the crimping part, which is bent from the upper portion of the crimping part to the inside of the battery can) and the top cap 200 in an internal area I (see FIG. 3) of the first gasket 500. Thus, even though the first gasket 500 is melted, an effect of preventing the battery can 100 and the safety vent 300 from directly contacting each other may be achieved.

When the insulation layer 700 is formed on the top surface of the top cap 200, a ratio of the thickness of the insulation layer 700 to a thickness of the top cap 200 may range of 0.015 to 0.15. When the ratio of the thickness of the insulation layer 700 to a thickness of the top cap 200 is less than 0.015, since the thickness of the insulation layer is excessively small, the heat generated in the upper portion of the secondary battery may be smoothly released to the outside. Thus, when the external electrical conductive object is electrically connected directly to the positive electrode and the negative electrode of the cylindrical secondary battery, the electrode tab may not be quickly broken. On the other hand, the ratio of the thickness of the insulation layer 700 to the thickness of the top cap 200 exceeds 0.15, since the thickness of the insulation layer is excessively large, assemblability of the secondary battery, particularly, the top cap may be deteriorated, and the secondary battery may be deformed. More preferably, the ratio of the thickness of the insulation layer 700 to the thickness of the top cap 200 may range of 0.021 to 0.064.

Particularly, the insulation layer 700 may have a thickness of 0.015 mm to 0.045 mm. Also, the top cap 200 may have a thickness of 0.3 mm to 1.0 mm.

### Embodiment 1

Silicon dioxide (SiO2), an organic binder, and an inorganic binder were added to a solvent isopropyl alcohol and dipropyleneglycol monomethyl ether to manufacture a composition for forming an insulation layer. The silicon dioxide was contained at a content of 20 wt%, the organic binder was contained at a content of 10 wt%, and the inorganic binder was contained at a content of 20 wt% on the basis of a total weight of the composition for forming the insulating layer.

Coating was performed in a coating manner in which the composition for forming the insulation layer, which is prepared as the described above, is applied and pressed to an edge of a top cap of a cylindrical battery can to form an insulation layer having a thickness of 0.020 mm.

Here, a safety vent was provided below the top cap, and a CID filter was provided below the safety vent. A central portion of the safety vent and a central portion of the CID filter adhered to each other, and a peripheral portion of the safety vent and a peripheral portion of the CID filter were spaced apart from each other by a second gasket. The second gasket was closely attached to a bottom surface of the safety vent and a top surface of the CID filter. The top cap had a thickness of 0.7 mm, and the safety vent had a thickness of 0.3 mm.

The top cap was disposed in an upper portion of the battery can in which an electrode assembly is accommodated thereby manufacturing the cylindrical secondary battery sealed with a first gasket.

### Embodiment 2

A cylindrical secondary battery was manufactured in the same manner as in Embodiment 1, except that an insulation layer formed on a top surface of a top cap has a thickness of 0.025 mm.

### Embodiment 3

A cylindrical secondary battery was manufactured in the same manner as in Embodiment 1, except that an insulation layer formed on a top surface of a top cap has a thickness of 0.030 mm.

### Embodiment 4

A cylindrical secondary battery was manufactured in the same manner as in Embodiment 1, except that an insulation layer formed on a top surface of a top cap has a thickness of 0.035 mm.

### Embodiment 5

A cylindrical secondary battery was manufactured in the same manner as in Embodiment 1, except that an insulation layer formed on a top surface of a top cap has a thickness of 0.040 mm.

### Comparative Example

A cylindrical secondary battery was manufactured in the same manner as in Embodiment 1, except that an insulation layer is not formed on a top surface of a top cap.

### Experimental Example 1

After a positive electrode and a negative electrode of the secondary battery according to Embodiments and Comparative Example are electrically connected to each other by using a circuit having resistance of 15.0 mQ, a time taken to cut off current was measured. The measurement results are as follows.

**[Table 1]**

| | Em bodiment 1 | Em bodiment 2 | Em bodiment 3 | Em bodiment 4 | Em bodiment 5 | Co mparative Example |
|---|---|---|---|---|---|---|
| Thickness (mm) of insulation layer | 0.020 | 0.025 | 0.030 | 0.035 | 0.040 | - |
| Time (seconds) taken to cut off current | 18.9 | 16.3 | 13.1 | 11.5 | 9.6 | 24.6 |

In case of Embodiments in comparison to Comparative Example, it was confirmed that the time taken to cut off the current of the secondary battery is significantly reduced. For example, in case of Embodiment 5 in comparison to Comparative Example, it was confirmed that the time taken to cut off the current of the secondary battery is significantly reduced to about 40%. Particularly, according to Experimental Example 1, it was confirmed that the time taken to cut off the current is reduced as the insulation layer becomes thicker.

### Experimental Example 2

After a positive electrode and a negative electrode of the secondary battery according to Embodiment 2 and Comparative Example are electrically connected to each other by using a circuit having resistance of 15.0 mQ, a temperature of the secondary battery was measured at a time point at which current is cut off by using a thermocouple attached to a main body of the secondary battery. The measurement results are as follows.

**[Table 2]**

| | Embodiment 2 | Comparative Example |
|---|---|---|
| Thickness (mm) of insulation layer | 0.025 | - |
| Temperature (°C) of secondary battery at time point at which current is cut off | 79.8 | 110.3 |

In case of Embodiment 2 in comparison to Comparative Example, it was confirmed that the temperature of the secondary battery is significantly reduced at the time point at which the current of the secondary battery is cut off. That is, it was confirmed that the temperature of the secondary battery according to Embodiment 2 is significantly reduced to about 70% at the time point at which the current is cut off when compared to the temperature of the secondary battery according to Comparative Example.

## Claims

1. A secondary battery comprising:
a battery can accommodating an electrode assembly and having a structure of which an upper side is opened;
a top cap provided on an upper portion of the battery can;
a safety vent provided below the top cap;
a current interrupt device (CID) filter provided below the safety vent;
a first gasket provided on an inner surface of the upper portion of the battery can and closely attached to a side portion of the safety vent to insulate the safety vent from the upper portion of the battery can; and
a second gasket provided between the safety vent and the CID filter and closely attached to an upper portion of the CID filter to surround an outer end of the CID filter, the second gasket being closely attached to a lower portion of the safety vent,
wherein an insulation layer is formed on an area on which the top cap and the first gasket are closely attached to each other, and
the insulation layer comprises a ceramic material and a binder.

2. The secondary battery of claim 1, wherein the binder comprises an organic binder.

3. The secondary battery of claim 1, wherein the ceramic material comprises aluminum oxide or silicon oxide.

4. The secondary battery of claim 1, wherein the binder is contained at a content of 20 wt% to 90 wt% on the basis of a total weight of the insulation layer.

5. The secondary battery of claim 1, wherein a ratio of a thickness of the insulation layer to a thickness of the top cap ranges of 0.015 to 0.15.

6. The secondary battery of claim 1, wherein a crimping part having a structure that is entirely or partially bent in an S-shape is formed on the upper portion of the battery can, and
the first gasket is closely attached to an inner surface of the crimping part.

7. The secondary battery of claim 1, wherein the insulation layer is formed on an area, which is disposed between an upper end of the crimping part and the top cap, of an inner area of the first gasket as a top surface of the top cap.

8. The secondary battery of claim 1, wherein the insulation layer has a thickness of 0.015 mm to 0.045 mm.

9. The secondary battery of claim 1, wherein the top cap has a thickness of 0.3 mm to 1.0 mm.
